# NEUE EUROPÄISCHE PATENTSCHRIFT

(11) **EP 1 776 862 B2**
(45) Veröffentlichungstag und Bekanntmachung des Hinweises auf die Entscheidung über den Einspruch: **24.10.2012**
(45) Hinweis auf die Patenterteilung: 22.07.2009
(21) Anmeldenummer: 06018195.5
(22) Anmeldetag: 31.08.2006
(51) Int. Cl.: A01M 1/20, A01N 25/18, B65B 1/00

(54) **Beutel für insektizidhaltiges Trägermaterial, insbesondere Mottenschutzsäckchen**
Bag for an insecticide-containing carrier, particularly for protection against moths
Sachet pour un matériel contenant un insecticide, en particulier pour la protection contre les mites

(30) Priorität: 20.10.2005 DE 202005016557 U; 01.03.2006 DE 202006003324 U; 03.04.2006 DE 202006005394 U
(43) Veröffentlichungstag der Anmeldung: 25.04.2007
(60) Teilanmeldung: 09003713.6
(73) Patentinhaber: ARIS Handels GmbH, 85049 Ingolstadt (DE)
(72) Erfinder: Ledin, Ali, 85053 Ingolstadt (DE); Önem-Siakou, Evgenia, Dr., 85049 Ingolstadt (DE)
(74) Vertreter: Liebl, Thomas

(56) Entgegenhaltungen:
- EP-A2- 0 131 759
- EP-A2- 0 292 948
- WO-A-01/80909
- DD-A5- 281 537
- DE-A1- 3 421 290
- DE-A1- 10 307 672
- DE-U1- 8 308 421
- DE-U1-202005 016 557
- DE-U1-202006 003 324
- DE-U1-202006 005 394
- GB-A- 509 275
- GB-A- 2 105 194
- GB-A- 2 110 524
- GB-A- 2 313 060
- GB-A- 2 321 379
- US-A- 3 771 254
- US-A- 5 738 153
- US-A- 6 065 687

## Beschreibung

Die Erfindung betrifft einen Beutel für insektizidhaltiges Trägermaterial, insbesondere Mottenschutzsäckchen, nach Anspruch 1 sowie ein Verfahren zum Herstellen eines Beutels nach Anspruch 14.

Aus der EP 0 131 759 A2 ist ein Beutel für insektizidhaltiges Trägermaterial bekannt, der eine aus einem dampf- und/oder gasdurchlässigen Vliesstoff gebildete Beutelwand aufweist. Von der Beutelwand ist ein Hohlraum als Beutelinnenraum umgrenzt, in dem ein insektizidhaltiges Trägermaterial aufgenommen ist, wobei auf der Beutelaußenseite als Sichtseite mittels einer Druckfarbe ein unspezifizierter Beutelaufdruck aufgebracht sein kann. Konkret ist der Vliesstoff hier als Mehrkomponentenvliesstoff ausgebildet, der mindestens ein faserbildendes Material mit einem Schmelz- bzw. Erweichungspunkt über 165° C und ein zweites Material mit thermoplastischen Eigenschaften und einem Schmelz- bzw. Erweichungspunkt unter 145° C umfasst. Das faserbildende Material ist hier vorzugsweise ein Polyamid, Polyester, Polyacrylharz, Polypropylen und Glasfasern, deren Faserlänge zwischen 5 bis 20mm beträgt. Auch das zweite, thermoplastische Eigenschaften aufweisende Material soll faserartig vorliegen, und zwar mit einer Faserlänge zwischen 0,5 bis 1mm. Dieses zweite Material soll beispielsweise Polyethylen, Copolymere aus Ethylen, Propylen oder Butylen und Vinylacetat bzw. Polypropylen sein. Zur Herstellung des Vliesstoffes werden das faserbildende Material einerseits und das zweite, thermoplastische Eigenschaften aufweisende Material im Verhältnis 50:50 bis 70:30 Gew. % unter Verwendung eines Bindemittels verfestigt. Auf den so hergestellten Vliesstoff wird eine Beschichtung aus einem thermoplastischen Material zumindest in denjenigen Bereichen aufgebracht, wo der Vliesstoff anschließend zur Beutelausbildung mit einer Verschweißungsnaht versehen werden soll. Der Vliesstoff selbst wird mit einem Flächengewicht zwischen 50 und 120g pro qm hergestellt. Dieser fertig hergestellte Vliesstoff kann dann durch Kalandrieren, Bedrucken, Färben, etc. veredelt werden. Ferner ist vorgesehen, die Fliesstoffbahnen und/oder die fertigen Beutel mit einem geeigneten hydrophobierenden Mittel zu imprägnieren, damit das Beutelmaterial selbst besser wasserabstoßend ist.

Als Schädlingsbekämpfungsmittel bzw. Insektizide werden Phosphid entwickelnde Zusammensetzungen auf der Basis von Erdalkali- und/oder Erdmetallphosphiden, insbesondere Calziumphosphid, Magnesiumphosphid und vorzugsweise Aluminiumphosphid vorgeschlagen. Die Erdalkali- und/oder Ermetallphosphide werden hauptsächlich als Rodentizide in der Begasung angewendet. Das durch die Hydrolyse entstandene Phosphin (PH₃) ist sehr giftig und für den Haushalt ungeeignet.

Nach dem Falten der Vliesstoffbahn zu einer Beuteltasche, dem Befüllen der Beuteltasche mit dem insektizidhaltigen Trägermaterial und dem anschließenden Fertigverschweißen des Vliesstoffbeutels wird dieser so fertig hergestellte Beutel gas- und feuchtigkeitsdicht verpackt, wozu beispielhaft eine Aluminiumfolienverpackung oder eine Dose vorgeschlagen wird.

Derartige insektizidhaltige Beutel haben jedoch den Nachteil, dass sie in ihrer olfaktorischen Wahrnehmung von Menschen regelmäßig als stechend, beißend bzw. gestankähnlich wahrgenommen werden. Dadurch bestehen mit derartigen Produkten Probleme hinsichtlich der Kundenakzeptanz.

Durch die Zugabe von Duftstoffen, wie dies in Verbindung mit blattartigen, mit Insektizid und Parfums getränkten Trägermaterialien z. B. aus der DE 34 212 90 A1 bekannt ist, kann die olfaktorische Wahrnehmung positiv verändert werden, was die Kundenakzeptanz wesentlich erhöht.

Werden jedoch den zuvor näher beschriebenen insektizidhaltigen Beuteln zusätzlich Duftstoffe zugegeben, z. B. Duftöle und dergleichen, besteht die Gefahr, dass die den Beutelaufdruck ausbildende Druckfarbe bei einer Beutelwandbenetzung und/oder Beutelwanddurchnässung mit den darin aufgenommenen Medien abfärbt, was insbesondere bei der Verwendung eines solchen Beutels als Mottenschutzsäckchen in Verbindung mit Kleidungsstücken zu einer unerwünschten Beschädigung und/oder Zerstörung der Kleidungsstücke führen kann. Besonders empfindlich gegenüber Duftstoffen haben sich hierbei Vliesstoff-Beutel erwiesen, die eine groß- bzw. vollflächige Außenbedruckung aufweisen.

Ein weiterer Nachteil dieser Beutel besteht in der unkontrollierten Wirkstoffabgabe, d. h. hohe, rasch abfallende Wirkstoffabgabe über einen lediglich kurzen Zeitraum.

Aus der EP 0 131 759 A2 ist bereits ein Beutel für Schädlingsbekämpfungsmittel bekannt, der zumindest teilweise aus einem gas- und wasserdampfdurchlässigen, wasserfreien Vliesstoff besteht. Dieser Vliesstoff ist durch einen Mehrkomponentenvliesstoff gebildet, der mindestens ein faserbildendes Material mit einem Schmelz- bzw. Erweichungspunkt über 165°C und ein zweites Material mit thermoplastischen Eigenschaften sowie einem Schmelz- bzw. Erweichungspunkt unter 145°C umfasst. Hierdurch soll die Verschweißbarkeit von Beutel aus Vliesmaterialien verbessert werden. Der Beutel selbst wird mit einer bestimmten Menge eines Schädlingsbekämpfungsmittels befüllt. Weiter ist auch vorgesehen, die Bezeichnung des Schädlingsbekämpfungsmittels, Gebrauchsanweisungen und Warnungen vor unsachgemäßen Gebrauch der Schädlingsbekämpfungsmittel auf den Beutel aufzudrucken. Mit einem solchermaßen aufgebauten und hergestellten Beutel ergeben sich somit ebenfalls die zuvor ausführlich geschilderten Nachteile.

Weiter ist aus der US 5,738,153 eine Vorrichtung bekannt, mittels der feste, trockene und vliesfähige Materialien, insbesondere Agrarprodukte, mittels einer Befüllvorrichtung definiert abgefüllt werden können. Um eine definierte Menge abfüllen zu können, sind Dispenserventile und Wägeeinrichtungen vorgesehen, die die exakte chargenweise Zudosierung in einen Behälter erlauben.

Aufgabe der Erfindung ist es daher, einen Vliesstoff-Beutel für insektizid- und duftstoffhaltiges Trägermaterial, insbesondere als Mottenschutzsäckchen, zur Verfügung zu stellen, mittels dem die zuvor genannten Nachteile vermieden werden. Des weiteren ist es eine Aufgabe der vorliegenden Erfindung, ein Verfahren zur Verfügung zu stellen, mittels dem die erfindungsgemäßen Beutel auf einfache Weise mit hoher Qualität hergestellt werden können.

Diese Aufgabe wird bezüglich des Beutels gelöst mit den Merkmalen des Anspruchs 1.

Erfindungsgemäß ist vorgesehen, dass in dem Beutelinnenraum neben dem insektizidhaltigen Trägermaterial auch ein duftstoffhaltiges Trägermaterial aufgenommen ist, wodurch eine gewünschte olfaktorische Wahrnehmung eingestellt werden kann. Der Beutelaufdruck ist weiter mittels einer bei einer Beutelwandbenetzung und/oder Beutelwanddurchnässung mit Insektizid und/oder Duftstoff nicht abfärbenden Druckfarbe ausgebildet. Eine derartige Nichtabfärbung wird mittels einer Zweikomponentenfarbe als Druckfarbe erzielt, die einen Härterbestandteil vorgegebener Konzentration aufweist. Damit kann auch bei einer hohen zusätzlichen Duftstoffkonzentration ein Abfärben der Druckfarbe, insbesondere bei ganz- bzw. vollflächig bedruckten Beutelaußenseiten, bei denen viel Farbe aufgebracht ist, verhindert werden. Zusätzlich dazu ist weiter vorgesehen die Beutelwand zur Einstellung einer definierten Permeabilität der Beutelwand und damit einer definierten Gasdurchlässigkeit bzw. Dampfdurchlässigkeit an der Beutelaußenseite mit einer vorgegebenen Anzahl von Rasterpunkten pro vorgegebener Fläche, vorzugsweise pro cm², zu bedrucken. Damit kann, abgestimmt auf die eingebrachten Duftstoffe und/oder Wirkstoffe, eine gewünschte Verdampfungs- bzw. Ausgasungsrate eingestellt werden. Dies ist wesentlich, um beispielsweise für die Anwendung als Mottenschutzsäckchen eine relativ lange Wirksamkeitszeitdauer einstellen zu können. Wie zudem umfangreiche erfinderseitige Versuche gezeigt haben, werden besonders zufriedenstellende Ergebnisse dann erreicht, wenn die Anzahl der Rasterpunkte zwischen 12 und 48 Rasterpunkten pro 1 cm² bedruckter Fläche liegt.

Die erfinderseitigen umfangreichen Versuche haben zudem gezeigt, dass es auch bei hohen Insektizid- und vor allem hohen Duftstoffkonzentrationen zu keinem unerwünschten Abfärben bzw. Ablösen der Druckfarbe kommt, wenn diese als Zweikomponentenfarbe eine Härterkonzentration zwischen 1 bis 35 Gew. %, bevorzugt zwischen 3 bis 25 Gew. %, höchst bevorzugt zwischen 5 bis 23 Gew. % aufweist. Die Gew. %-Angaben sind hier jeweils auf das Gesamtgewicht der Zweikomponentenfarbe bezogen. Besonders widerstandsfähig gegen Insektizide und insbesondere Duftstoffe sind Beutelaufdrucke, bei denen auf 1 cm² bedruckten Außenwandbereich 0,05 bis 1 mg, bevorzugt 0,07 bis 0,3 mg und höchst bevorzugt 0,10 bis 0,2 mg der Zweikomponentenfarbe aufgebracht werden. Insbesondere die Kombination dieser Farbauftragsmenge mit der zuvor angegebenen Härterkonzentration in der Zweikomponentenfarbe bzw. der wirk- und/oder duftstoffspezifisch vorgegebenen Anzahl der Rasterpunkte pro 1 cm² hat sich als besonders widerstandsfähig gegen das Ablösen bzw. Abfärben des Beutelaufdrucks bei einer Beutelwandbenetzung bzw. Beutelwanddurchnässung mit Insektizid und/oder Duftstoff gezeigt.

Die Zweikomponentenfarbe kann zusätzlich mit vorgegebenen Mengen einer Transparentpaste vermischt sein, um den gewünschten Farbton des Beutelaufdrucks einzustellen. Ebenso kann gemäß einer bevorzugten Ausgestaltung ein Verdünner hinzugegeben werden, mittels dem die Druckfarbe druckfertig gemacht wird. Auch ein Verzögerer kann hinzugegeben werden, mittels dem der Aushärtezeitraum eingestellt werden kann. Die Farbkomponente der Zweikomponentenfarbe ist bevorzugt eine Polyester- oder Polyurethanfarbkomponente, der Härter z. B. ein Siloxan, während der Verdünner bevorzugt ein Essigsäureester und der Verzögerer ein Keton des Cyclohexans, z. B. Isophoron, ist.

Als Vliesstoff selbst wird bevorzugt ein parallelgebundenes Vlies verwendet, das ein Vliesgewicht zwischen 40 und 150 g/m², bevorzugt zwischen 60 bis 120 g/m² und höchst bevorzugt von 80 g/m² aufweist. Mit einem derartigen parallelgebundenen Vlies wird eine sehr gute Insektizid- und/oder Duftstoffdurchlässigkeit durch die Beutelwand erzielt. Grundsätzlich kann auch ein kreuzgebundenes Vlies verwendet werden, dessen Durchlässigkeit hinsichtlich der Insektizide- und Duftstoffe jedoch geringer ist.

Weiter bevorzugt ist der Vliesstoff durch ein wasserstrahlverfestigtes Polymer, vorzugsweise ein synthetisches Polymer, höchst bevorzugt ein mit Polyethylen beschichtetes Polyester gebildet. Alternativ dazu kann der Vliesstoff aber auch durch ein Polyester-Viskose-Vlies gebildet sein. Derartige Vliesstoffe eignen sich hervorragend für die Verwendung als Aufnahmebeutel für Insektizide und/oder Duftstoffe, die über die Beutelwand abgegeben werden sollen.

Konkret ist der Beutel aus einer Vliesstoffbahn gebildet, die auf einer später die Außenseite bildenden ersten Seite mit dem Beutelaufdruck und auf einer später die Beutelinnenwand bildenden zweiten Seite wenigstens bereichsweise mit einer Befestigungsschicht, vorzugsweise mit einer Schicht aus einem Thermoplastmaterial, insbesondere einer Polyethylenschicht, beschichtet ist, mittels der vorgegebene Beutelwandbereiche zur Ausbildung des Beutels aneinander angehaftet werden können, z. B. durch Verschweißen oder dergleichen.

Gemäß einer besonders bevorzugten Ausführungsform ist erfindungsgemäß vorgesehen, die Beutelaußenwand mit der Zweikomponentenfarbe im Siebdruckverfahren, insbesondere im Flachbett-Siebdruckverfahren, zu bedrucken. Dadurch kann zum einen die für die Einstellung der Permeabilität des Beutels erforderliche Anzahl von Rasterpunkten pro vorgegebener Fläche einfach und funktionssicher aufgebracht werden. Zudem wird durch das Siebdruckverfahren, insbesondere das bevorzugte Flachbett-Siebdruckverfahren, sichergestellt, dass die elastische Vliesstoffbahn nicht verzogen wird, womit ein exaktes Druckbild mit exaktem Stand entsteht.

In dem Beutelinnenraum ist bevorzugt zusätzlich zum insektizid- und/oder duftstoffhaltigen Trägermaterial weiteres Füllmaterial aufgenommen, was z. B. ein Kunststoffgranulat sein kann als bloßes, keine weitere Funktion aufweisendes Kunststoffgranulat. Das zusätzliche Füllmaterial kann aber gemäß einer besonders bevorzugten Ausgestaltung auch durch Dufthölzer und/oder Blüten ausgebildet sein, die neben ihrer Grundfunktion als Füllmaterial zusätzlich in einer besonders vorteilhaften Doppelfunktion auch gleichzeitig einen gewünschten Duftstoff zusätzlich zum Insektizid abgeben. Als Dufthölzer und/oder Duftblüten kommen insbesondere Lavendel, Zedernholz, Hopfenblütenöl, Jasmin, Rosenblätter und Veilchen in Frage. Für den Fall einer reinen Duftstoffabgabe können diese Dufthölzer und/oder Blüten auch als Trägermaterial verwendet werden.

Die Anforderungen, welche das Trägermaterial erfüllen muss, sind besonders hoch. Beispielsweise muss es eine hohe Aufnahmekapazität, eine schnelle Aufnahme und eine konstante Abgabe des Wirk- und Duftgemisches zur Verfügung stellen, so dass die Wirksamkeit von z. B. Mottenschutzsäckchen bis zu einem Standardzeitraum von drei Monaten nach dem Öffnen gegeben ist. All diese Anforderungen werden durch mikroporöse Kunststoffe erfüllt. Als besonders geeignet für die Anwendung in den Mottensäckchen haben sich mikroporöse Kunststoffe aus Polypropylen und/oder Polyethylen und/oder Polyamid und/oder Polyacrylat oder Derivaten dieser Kunststoffe, insbesondere Kunststoffe aus PP, HDPE, LDPE, LLDPE, EVA und PA-6 herausgestellt. Versuche mit diesen Materialien zeigen eine Verlängerung der Wirksamkeit von bis zu 5 Monaten. Gemäß einer besonders bevorzugten Ausgestaltung der Erfindung hierzu ist vorgesehen, dass das Trägermaterial durch ein mikroporöses Kunststoffgranulat gebildet ist, das wenigstens 100%, vorzugsweise wenigstens 200% seines Eigengewichtes an Insektizid- und/oder Duftstoffmenge speichert. Mit einem derartigen mikroporösen Kunststoffgranulat, das ein Vielfaches seines Eigengewichtes an Insektiziden und/oder Duftstoffen einspeichern kann, wird auf vorteilhafte Weise eine hohe Insektizid- und/oder Duftstoffkonzentration im Beutel ohne Vergrößerung des Beutelvolumens möglich, wobei aufgrund der erfindungsgemäßen Bedruckung mit einer nicht abfärbenden Druckfarbe, insbesondere mit einer einen Härter aufweisenden Zweikomponentenfarbe, zudem bei einer Beutelwanddurchnässung keine Ablösegefahr der Farbe besteht. Dieses mikroporöse Kunststoffgranulat speichert die Duftstoffe und/oder Insektizide in den Mikroporen und gibt diese insbesondere bei Luftkontakt in gas- oder dampfförmiger Form ab, wodurch diese über die Beutelwand des Vliesstoffbeutels in die Umgebung entweichen können.

Das Insektizid bzw. der Wirkstoff selbst ist bevorzugt durch Substanzen aus der Gruppe der Pyrethroide gebildet, wobei hier insbesondere das Transfluthrin und/oder Emphentrin und/oder D-Phenotrin und/oder Metofluthrin in Frage kommen. Höchst bevorzugt ist die Verwendung von Transfluthrin. Alternativ oder zusätzlich kann das Insektizid aber auch durch den natürlichen Wirkstoff Lavandinöl gebildet sein. Mit derartigen Insektiziden wird eine hohe Mortalität von Schädlingen, insbesondere von Motten erzielt.

Die zuvor genannte Aufgabe wird zudem gelöst mit einem Verfahren gemäß den Merkmalen des Patentanspruchs 14.

Mit den Merkmalen der Ansprüche 14 bis 17 wird ein einfaches und funktionssicheres Verfahren zur Herstellung der erfindungsgemäßen Beutel angegeben. Insbesondere von Vorteil ist hier der Transport der abgelängten Beutel mittels einer Fördereinrichtung zu oder über eine Wägevorrichtung, um diejenigen Beutel aussortieren zu können, die nicht innerhalb eines vorgegebenen Gewichtsbereiches liegen. Die Aussortierung erfolgt hierbei vorzugsweise durch Druckluftbeaufschlagung, indem solche Beutel, die als außerhalb des vorgegebenen Gewichtsbereiches liegend erfasst worden sind, mittels eines Luftstroms weggeschossen werden.

Weiter bevorzugt ist in diesem Zusammenhang eine Befüllvorrichtung für die Beutel, die einen ein- oder mehrkammerigen Dispenser aufweist, in der das Trägermaterial und/oder das weitere Füllmaterial aufgenommen ist und der pro Kammer eine Dispenser-Auslassöffnung aufweist, die mittels eines eine Durchlassöffnung pro Kammer aufweisenden Verschlusselementes verschließbar ist, so dass die Durchlassöffnung in der Dosierstellung mit der Dispenser-Auslassöffnung fluchtet und eine je nach - über die Taktung vorgegebene - Verweilzeit bestimmte Menge an Trägermaterial und/oder Füllmaterial freigibt, während die Dispenser-Auslassöffnung in der Nicht-Dosierstellung mittels des Verschlusselementes verschlossen ist.

Die Erfindung wird nachfolgend anhand einer Zeichnung näher erläutert.

Es zeigen:

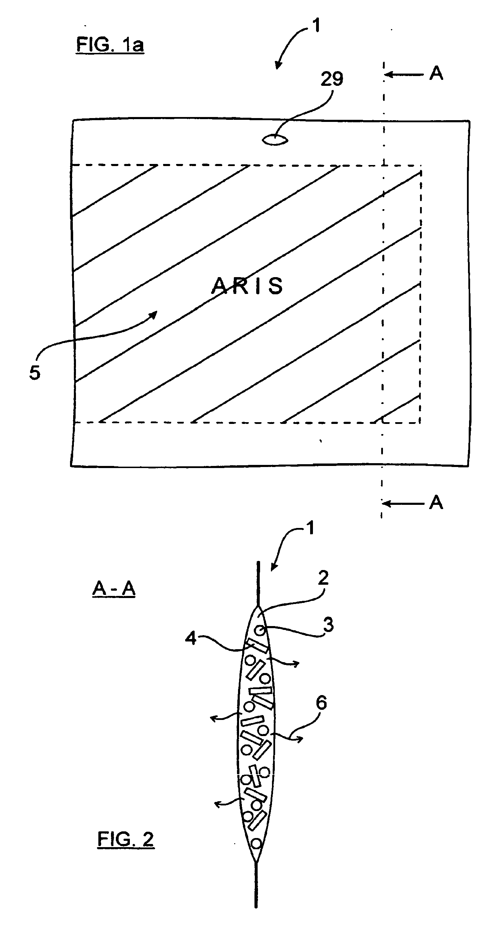

- Fig. 1a: eine schematische Draufsicht auf einen als Mottenschutzsäckchen ausgebildeten erfindungsgemäßen Beutel,
- Fig. 1 b: eine schematische, stark vergrößerte Darstellung eines 1 cm² großen Wandabschnitts mit 12 Rasterpunkten (12er-Raster),
- Fig. 1c: eine schematische, stark vergrößerte Darstellung eines 1 cm² großen Wandabschnitts mit 28 Rasterpunkten (28er-Raster),
- Fig. 2: schematisch eine Schnittansicht entlang der Linie A-A der Fig. 1,
- Fig. 3 und 4: schematische Ansichten eines mittels einer Folienumverpa-ckung verpackten Mottenschutzsäckchens,
- Fig. 5: schematisch eine erfindungsgemäße Vorrichtung zum Be-drucken des Vliesstoffes, und
- Fig. 6: schematisch eine erfindungsgemäße Vorrichtung zur Beu-telherstellung.

In der Fig. 1a ist schematisch eine Draufsicht auf ein erfindungsgemäßes Mottenschutzsäckchen 1 gezeigt, dessen Beutelwand aus einem dampf- und gasdurchlässigen Vliesstoff ausgebildet ist. Wie dies insbesondere der Fig. 2, die einen Schnitt entlang der Linie A-A der Fig. 1a zeigt, entnommen werden kann, weist das Mottenschutzsäckchen einen Beutelinnenraum 2 auf, in dem einerseits ein mit einem Insektizid getränktes Trägermaterial 3 und zusätzlich ein z. B. Kunststoffgranulat als Füllmaterial 4 aufgenommen ist. Anstelle eines Kunststoffgranulats kann das Füllmaterial 4 aber auch durch Blüten, z. B. getrocknete Blüten ausgebildet sein. Beispielsweise kommen hier Hopfenblüten, Rosenblüten etc. in Betracht.

Das Trägermaterial selbst ist bevorzugt ein mikroporöses Kunststoffgranulat aus z. B. Polypropylen, das ein Mehrfaches seines Eigengewichts an Insektizid einspeichern kann. Als Insektizid wird beispielsweise Transfluthrin verwendet.

Wie dies der Fig. 1a weiter entnommen werden kann, ist auf der Beutelaußenseite ein Beutelaufdruck 5 aus einer Zweikomponentenfarbe, die einen Härterbestandteil aufweist, aufgebracht. Ein derartiger im Siebdruckverfahren aufgebrachter Beutelaufdruck 5 ist selbst bei einer Beutelwandbenetzung und/oder Durchnässung mit Insektizid und/oder Duftstoff oder dergleichen nicht ablösend und kann daher damit in Berührung kommende Kleidungsstücke oder andere Textilien nicht beschädigen oder verschmutzen.

Wie dies schematisch in der Fig. 2 durch die Pfeile 6 dargestellt ist, können die im Beutelinnenraum 2 aufgenommenen Insektizide und/oder Duftstoffe mit Luft reagieren und ausgasen, so dass die Insektizide als Gas 6 durch die Vliesstoff-Beutelwand hindurch in die Umgebung entweichen können.

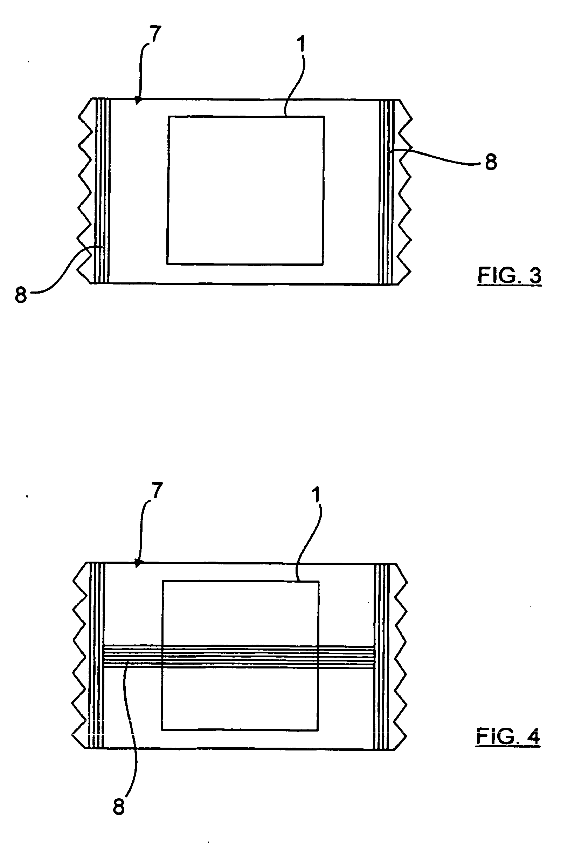

Um sicherzustellen, dass ein derartiges Entweichen des Insektizides und/oder der Duftstoffe aus dem Beutelinnenraum 2 nur im gewünschten Einsatzfall erfolgt, werden die Mottenschutzsäckchen 1, wie dies in den Figuren 3 und 4 dargestellt ist, mittels einer Folienumverpackung 7 gas- und flüssigkeitsdicht versiegelt. Die Folienumverpackung 7 ist durch einen Folienschlauch ausgebildet, der an den beiden gegenüberliegenden Randseiten jeweils eine Querverschweißung 8 aufweist, die anders als bei einer Längsverschweißung sicherstellt, dass auch bei einer ggf. leichten Beschädigung der Verschweißung keine Luft in die Folienumverpackung 7 gelangen und damit ein ggf. unerwünschtes Ausgasen des Insektizides und/oder Duftstoffes ermöglicht wird.

In der Fig. 4 ist eine Folienumverpackungsvariante gezeigt, bei der die Folienumverpackung 7 ferner auch noch in Längsrichtung gesehen verschweißt ist. Auch diese Verschweißung ist wiederum als Querschweißung 8 ausgebildet.

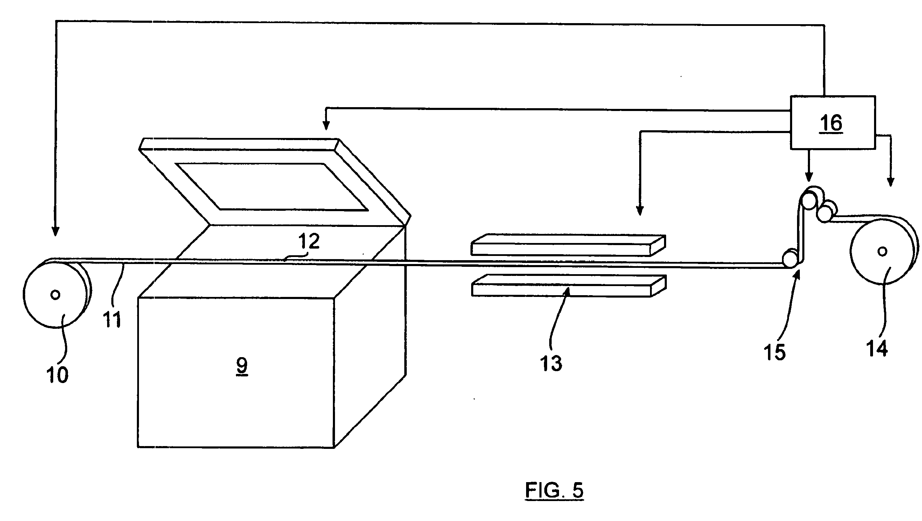

In der Fig. 5 ist schematisch eine Siebdruckvorrichtung 9, die hier als Flachbett-Siebdruckvorrichtung ausgebildet ist, gezeigt, in der der von einer Vliesstoff-Abwickelrolle 10 abgewickelte, unbedruckte Vliesstoff als Vliesstoffbahn 11 mit einem Vliesstoff-Druckbereich 12 für eine vorgegebene Verweilzeit entsprechend der Taktung der Siebdruckvorrichtung 9 eingebracht wird und dort mit einer Zweikomponentenfarbe, die einen Härterbestandteil aufweist, bedruckt wird, um eine Vliesstoffbahn 11 zur Verfügung zu stellen, die auf ihrer gesamten Bahnlänge eine Mehrzahl von gleichmäßig voneinander beabstandeten, später einen Beutelaufdruck 5 ausbildenden Druckbereichen ausbildet. Unmittelbar nach der Siebdruckvorrichtung 9 ist hier eine lediglich schematisch gezeigte Heizvorrichtung 13 angeordnet, die beispielsweise durch Heizstrahler gebildet sein kann, die den frisch bedruckten Vliesstoff-Druckbereich für eine vorgegebene Zeitdauer mit Wärme beaufschlagen, um die Druckfarbe zu trocknen und eine Aushärtung des Härterbestandteils durch Vernetzung insbesondere auch mit dem Vliesstoff zu ermöglichen.

Der Heizvorrichtung 13 ist wiederum eine Vliesstoff-Aufwickelrolle 14 nachgeschaltet, die die bedruckte Vliesstoffbahn im getrockneten Zustand aufwickelt.

Um in der Vliesstoffbahn 11 zwischen der Vliesstoff-Abwickelrolle 10 und der Vliesstoff-Aufwickelrolle 14 eine die Vliesstoffbahn 11 straffende Spannung aufrechtzuerhalten, ist der Vliesstoff-Aufwickelrolle 14 ferner noch eine Spanneinrichtung 15 vorgeschaltet, mittels der z. B. auf der Basis einer hier nicht dargestellten Druckbildabstandserfassung die richtige Spannung eingestellt werden kann. Die Spanneinrichtung 15 wird hier ebenso wie die Siebdruckvorrichtung 9, die Vliesstoff-Abwickelrolle 10, die Heizvorrichtung 13 und die Vliesstoff Aufwickelrolle 14 von einer hier lediglich schematisch dargestellten Steuereinrichtung 16 angesteuert, in der Daten erfasst, weiterverarbeitet und zu entsprechenden Ansteuerbefehlen für die einzelnen Bestandteile der Vorrichtung umgewandelt werden, insbesondere auch Taktzeiten für die Weitertaktung der Vliesstoffbahn 11 nach dem Bedrucken eines Vliesstoff-Druckbereichs 12 ermittelt und vorgegeben werden.

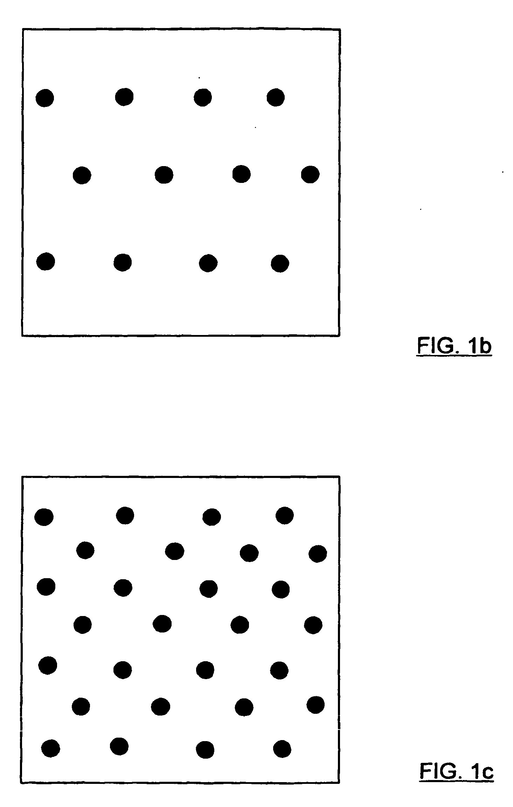

Als Druckfarbe wurden gemäß einem konkreten Ausführungsbeispiel, das hervorragende Ergebnisse bezüglich der Nichtablösbarkeit des Beutelaufdrucks 5 gezeigt hat, 105g einer Polyurethanfarbe und 30 g Härter mit einer Transparentpaste so vermischt, dass der gewünschte Farbton entstanden ist. Die Farbe wurde dann mittels der Siebdruckvorrichtung 9 auf die Vliesstoffbahn 11 im Vliesstoff-Druckbereich 12 aufgebracht, und zwar dergestalt, dass auf 1 cm² Vlies 0,18 mg der Zweikomponentenfarbe aufgedruckt worden ist. Die Druckfarbe wird hier beispielhaft so aufgedruckt, dass ein 28er-Raster ausgebildet wird, d. h. dass pro cm² 28 Rasterpunkte aufgedruckt sind, wie dies in der Fig. 1c stark vergrößert und lediglich schematisch dargestellt ist. Alternativ können Raster zwischen 12 und 48 Rasterpunkten gewählt werden zur Einstellung der wirkstoff- und/oder duftstoffspezifischen Gasdurchlässigkeit der Beutelwand. Lediglich zum Vergleich ist in der Fig. 1b noch ein 12er-Raster gezeigt, d. h. ein Raster mit 12 Rasterpunkten pro cm².

Eine fertig aufgerollte Vliesstoff-Aufwickelrolle 14 wird dann bevorzugt noch in eine hier nicht gezeigte Trockenkammer eingebracht, wo sie für eine vorgegebene Zeitdauer mit einem Warmluftstrom von 50°C beaufschlagt wird, um den Trocknungsvorgang noch weiter zu beschleunigen.

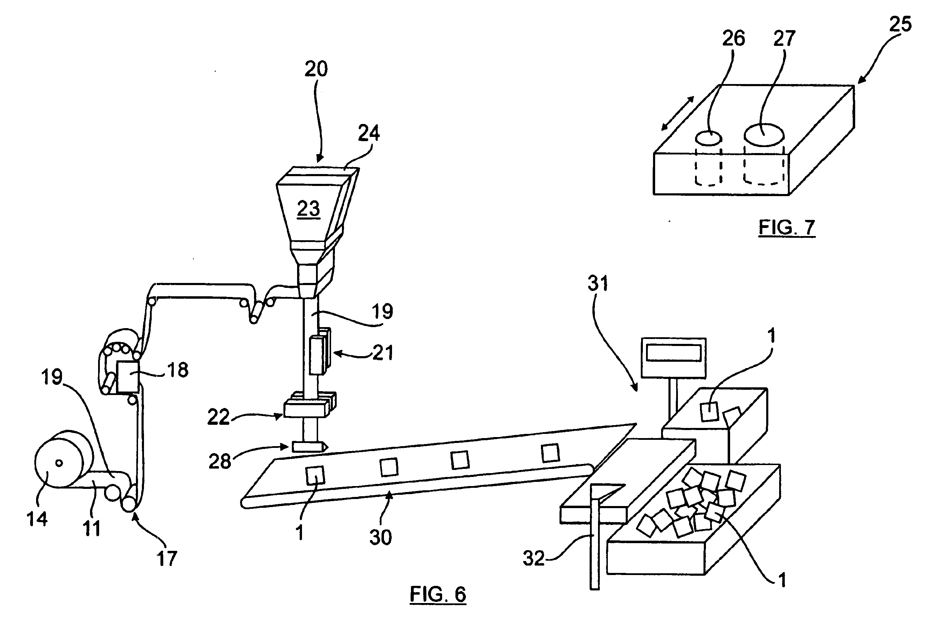

Eine so getrocknete Vliesstoff-Aufwickelrolle 14 kann dann, wie dies der Fig. 6 entnommen werden kann, einer Vorrichtung zum Herstellen von Mottenschutzsäckchen zugeführt werden, in der die bedruckte Vliesstoffbahn 11 wiederum abgewickelt wird und über ein Umlenk- und Spannrollensystem 17 an einem Heißprägestempel 18 vorbeigeführt wird, mittels dem an vorgegebenen Stellen der Vliesstoffbahn 11 eine Prägemarkierung, z. B. eine Kodierung oder dergleichen, aufgebracht werden kann. Die Vorrichtung zur Herstellung des Mottenschutzsäckchens ist hier so getaktet, dass intervallartig immer nur eine ganz bestimmte Länge der Vliesstoffbahn 11 in Bahnlaufrichtung weitergetaktet wird. Dementsprechend wird der Heißprägestempel 18 so mittels einer hier nicht dargestellten Steuereinrichtung angesteuert, dass auf einem Mottenschutzsäckchen an einer bestimmten vorgegebenen Stelle die Prägemarkierung aufgebracht ist, z. B. stets am unteren Säckchenrand eines fertigen Mottenschutzsäckchens.

Die Vliesstoffbahn 11 ist in der schematischen Darstellung der Fig. 6 auf ihrer bezogen auf die Bahnlaufrichtung unteren Seite mit dem Beutelaufdruck 5 versehen. Auf ihrer Oberseite 19 dagegen ist die Vliesstoffbahn 11 mit einer thermoplastischen Beschichtung, beispielsweise einer Polyethylenschicht beschichtet, deren Funktion nachfolgend noch näher erläutert wird.

Ausgehend vom Heißprägestempel 18 wird die Vliesstoffbahn dann unterhalb eines zweikammrigen Dispensers 20 als Bestandteil einer Befüllvorrichtung im Wesentlichen um 90° nach unten umgelenkt. Die Umlenkung erfolgt hierbei so, dass eine Art Schlauchbeutel entsteht, bei der die einander quer zur Bahnlaufrichtung gesehen gegenüberliegenden Bahnbereiche mit ihren beschichteten Oberseiten 19 aneinander zur Anlage gebracht und anschließend mittels bezogen auf die Bahnlaufrichtung seitlicher Schweißbacken 21 miteinander auf einer vorgegebenen Bahnlänge, die im Wesentlichen der späteren Mottenschutzsäckchenlänge entspricht, verschweißt werden. Gleichzeitig oder zeitversetzt dazu wird zur Ausbildung einer eine Beutelöffnung aufweisenden Beuteltasche, wiederum bezogen auf die Bahnlaufrichtung, mittels quer darunter verlaufender Schweißbacken 22 eine Querverschweißung der Vliesstoffbahn 11 vorgenommen.

Wie dies der schematischen Darstellung der Fig. 6 entnommen werden kann, liegt eine derartig ausgebildete Beuteltasche unmittelbar unterhalb des zweikammrigen Dispensers 20, der nachfolgend näher beschrieben wird: Der Dispenser 20 weist eine erste Kammer 23 für das insektizidhaltige Trägermaterial 3 und eine zweite Kammer 24 für das Füllmaterial 4 auf. Pro Kammer 23, 24 ist hier eine Auslassöffnung vorgesehen, die mittels eines in der Fig. 7 schematisch dargestellten Schiebeblocks 25 verschlossen werden können. Dieser Schiebeblock 25 weist eine erste Durchlassöffnung 26 und eine zweite Durchlassöffnung 27 auf, wobei die erste Durchlassöffnung 26 der ersten Kammer 23 und die zweite Durchlassöffnung 27 der zweiten Kammer 24 zugeordnet ist. Befindet sich der Schiebeblock 25 für eine mittels der hier nicht dargestellten Steuereinrichtung vorgegebene Zeitdauer in einer mit den beiden Auslassöffnungen der Kammern 23, 24 fluchtenden Ausrichtung, kann eine vorgegebene Menge an Trägermaterial 3 aus der ersten Kammer 23 und die erste Durchlassöffnung 26 sowie eine vorgegebene Menge von Füllmaterial 4 aus der zweiten Kammer 24 über die zweite Durchlassöffnung 27 in die Beuteltasche eingebracht werden. Neben der Verweilzeit in dieser fluchtenden Stellung ist für die abgegebene Menge auch noch die Größe bzw. der Durchmesser der Durchlassöffnungen entscheidend, der hier beispielhaft unterschiedlich groß gewählt ist. Nach Ende dieses Befüllvorgangs wird der Schiebeblock 25 gesteuert verfahren, und zwar dergestalt, dass die Auslassöffnungen der ersten Kammer 23 und zweiten Kammer 24 mittels des Verschiebeblocks verschlossen sind. Zu diesem Zeitpunkt wird dann die Vorrichtung weitergetaktet und die mit dem Trägermaterial 3 und dem Füllmaterial 4 befüllte Beuteltasche gelangt mit ihrem oberen Öffnungsrandbereich unterhalb die quer verlaufenden Schweißbacken 22, die anschließend betätigt werden, um den Beutel ganz zu schließen und ein fertig befülltes Mottenschutzsäckchen 1 auszubilden.

Zur Vereinzelung dieser fertig befüllten Mottenschutzsäckchen 1, die noch mit der Vliesstoffbahn 11 verbunden sind, wird mittels einer hier ebenfalls lediglich schematisch dargestellten Schneidvorrichtung 28 das fertig befüllte Mottenschutzsäckchen 1 abgelängt, wobei gleichzeitig mittels einer hier nicht im Detail gezeigten Stanzvorrichtung auch noch eine Aufhängeöffnung 29 in den Säckchenrandbereich eingebracht werden kann.

Wie dies insbesondere aus der Fig. 1a ersichtlich ist, sind die Mottenschutzsäckchen 1 somit durch die Schweißbacken U-förmig verschweißt. Dies erfolgt konkret so, dass die Schweißbacken 21 und 22 die Säckchenwände an den U-Bereichen zur Anlage bringen und zwischen sich verklemmen, so dass diese mit z. B. einer Polyethylenschicht beschichteten Bereiche entsprechend der Ausgestaltung nach Fig. 1a U-förmig miteinander verschmolzen werden.

Die abgelängten Mottenschutzsäckchen 1 fallen dann auf eine Fördereinrichtung 30, die die Mottenschutzsäckchen auf oder über eine Wägeeinrichtung 31 befordert, mittels der das Gewicht jedes einzelnen Mottenschutzsäckchens 1 ermittelt wird. Für den Fall, dass das Mottenschutzsäckchen 1 nicht innerhalb des vorgegebenen Gewichtsbereiches liegt, wird dieses mittels einer Drucklufteinrichtung 32 aussortiert. Die für in Ordnung befundenen Mottenschutzsäckchen 1 werden dagegen gesammelt und zu einer Folienumverpackungsvorrichtung, die hier nicht im Detail dargestellt ist, transportiert, wo die Mottenschutzsäckchen 1 mit der Folienumverpackung 7 luftdicht umschlossen werden.

Für die Zubereitung des Insektizides, mit dem das Trägermaterial 3 zu tränken ist, wird bevorzugt der Wirkstoff Transfluthrin im Trockenschrank auf ca. 50°C erhitzt. Sofern dieser Wirkstoff mittels einem Duftstoff kombiniert werden soll, kann einer bestimmten Menge des geschmolzenen Transfluthrins eine ebenfalls bestimmte Menge eines Duftstoffes, z. B. eines Lavendel-Duftstoffes langsam zugegeben werden. Die Zugabe erfolgt bevorzugt in einer Mischtrommel, in der die Mischung beispielsweise 15 Minuten gerührt wird, so dass eine homogene Duft-Wirkstoff-Lösung entsteht.

Anschließend wird dann diese Duft-Wirkstoff-Lösung einem Trägermaterial aus einem mikroporösen Kunststoffgranulat zugeführt, das bis zu 200% seines Eigengewichtes an Duft-Wirkstoff-Lösung aufnehmen kann. Konkret wird hier eine vorgegebene Menge des Granulats ebenfalls wiederum in ein mit einem Rührwerk versehenes Gefäß eingefüllt und eine bestimmte Menge der Duftstoff-Wirkstoff-Lösung zeitlich kontrolliert eingespritzt. Die Befüllgeschwindigkeit beträgt für besonders gute Mischergebnisse ca. 150 ml/min, wobei die Befüllung für 2 Minuten erfolgt. An diese Befüllphase schließt sich dann eine vorgegebene Pause von ca. 20 Sekunden an, innerhalb der die zudosierte Charge eingemischt wird, bevor der nächste Befüllvorgang startet. Dieser Vorgang wird solange wiederholt, bis die gewünschte Duftstoff-Wirkstoff-Charge vollständig eingemischt ist. Durch diese Methode wird ein gleichmäßiges Beladen des mikroporösen Kunststoffes ermöglicht.

## Patentansprüche

1. Beutel für insektizidhaltiges Trägermaterial, insbesondere Mottenschutzsäckchen,
mit einer aus einem dampf- und/oder gasdurchlässigen Vliesstoff gebildeten Beutelwand,
mit einem von der Beutelwand umgrenzten Hohlraum als Beutelinnenraum (2), in dem ein insektizidhaltiges Trägermaterial (3) aufgenommen ist, und
mit einem auf der Beutelaußenseite als Sichtseite mittels einer Druckfarbe aufgebrachten Beutelaufdruck (5),
**dadurch gekennzeichnet,**
**dass** in dem Beutelinnenraum (2) ein insektizid- und duftstoffhaltiges Trägermaterial (3) aufgenommen ist,
**dass** der Beutelaufdruck (5) mittels einer bei einer Beutelwandbenetzung und/oder -durchnässung mit Insektizid und/oder Duftstoff nicht abfärbenden Druckfarbe aufgebracht ist, wobei die Druckfarbe eine einen Härterbestandteil aufweisende Zweikomponentenfarbe ist und die Härterkonzentration in der Zweikomponentenfarbe zwischen 1 bis 35 Gew. % beträgt.

2. Beutel nach Anspruch 1, **dadurch gekennzeichnet, dass** der Beutelaufdruck (5) zur Einstellung einer vorgegebenen Gasdurchlässigkeit mit einer vorgegebenen Anzahl von Rasterpunkten pro vorgegebener Fläche auf die Beutelwand aufgedruckt ist.

3. Beutel nach Anspruch 2, **dadurch gekennzeichnet, dass** die Anzahl der Rasterpunkte zwischen 12 und 48 Rasterpunkte pro 1 cm² bedruckter Fläche beträgt.

4. Beutel nach einem der Ansprüche 1 bis 3, **dadurch gekennzeichnet, dass** die Härterkonzentration in der Zweikomponentenfarbe zwischen 3 bis 25 Gew. %, höchst bevorzugt zwischen 5 bis 23 Gew. % beträgt.

5. Beutel nach einem der Ansprüche 1 bis 4, **dadurch gekennzeichnet, dass** auf 1 cm² bedruckten Außenwandbereich 0,05 bis 1 mg, bevorzugt 0,07 bis 0,3 mg, höchst bevorzugt 0,10 bis 0,20 mg Zweikomponentenfarbe als Druckfarbe aufgebracht ist.

6. Beutel nach einem der Ansprüche 1 bis 5, **dadurch gekennzeichnet, dass** die als Zweikomponentenfarbe ausgebildete Druckfarbe zusätzlich mit vorgegebenen Mengen einer Transparentpaste und/oder eines Verdünners und/oder eines Verzögerers vermischt ist, und
dass die Farbkomponente der Zweikomponentenfarbe durch eine Polyester- oder Polyurethanfarbe gebildet ist.

7. Beutel nach einem der Ansprüche 1 bis 6, **dadurch gekennzeichnet, dass** der Vliesstoff durch ein parallelgebundenes oder kreuzgebundenes Vlies gebildet ist, der vorzugsweise ein Vliesgewicht zwischen 40 und 150 g/m², bevorzugt zwischen 60 bis 120 g/m², höchst bevorzugt von 80 g/m² aufweist.

8. Beutel nach einem der Ansprüche 1 bis 7, **dadurch gekennzeichnet, dass** der Vliesstoff durch ein wasserstrahlverfestigtes Polymer, vorzugsweise ein synthetisches Polymer, höchst bevorzugt ein mit Polyethylen beschichtetes Polyester, oder alternativ durch ein Polyester-Viskose-Vlies gebildet ist.

9. Beutel nach einem der Ansprüche 1 bis 8, **dadurch gekennzeichnet, dass** der Beutel (1) aus einer Vliesstoffbahn (11) gebildet ist, die auf einer im fertig hergestellten Zustand die Außenseite bildenden ersten Seite mit dem Beutelaufdruck (5) und auf einer im fertig hergestellten Zustand die Beutelinnenwand bildenden zweiten Seite wenigstens bereichsweise mit einer Befestigungsschicht, vorzugsweise mit einer thermoplastischen Schicht, höchst bevorzugt mit einer Polyethylenschicht, beschichtet ist, mittels der vorgegebene Beutelwandbereiche zur Ausbildung des Beutels aneinander anhaftbar sind.

10. Beutel nach einem der Ansprüche 1 bis 9, **dadurch gekennzeichnet, dass** die Beutelaußenwand mit der Zweikomponentenfarbe im Siebdruckverfahren, insbesondere im Flachbett-Siebdruckverfahren, bedruckt ist.

11. Beutel nach einem der Ansprüche 1 bis 10, **dadurch gekennzeichnet, dass** im Beutelinnenraum (2) zusätzlich zum insektizid- und duftstoffhaltigen Trägermaterial (3) weiteres Füllmaterial (4), insbesondere Kunststoffgranulat und/oder gekapselte Duftstoffe und/oder Dufthölzer und/oder Blüten aufgenommen ist.

12. Beutel nach einem der Ansprüche 1 bis 11, **dadurch gekennzeichnet, dass** das Trägermaterial (3) ein mikroporöses Kunststoffgranulat ist, das wenigstens 100 %, vorzugsweise wenigstens 200 % seines Eigengewichtes an Insektizid- und/oder Duftstoffmenge speichert.

13. Beutel nach einem der Ansprüche 1 bis 12, **dadurch gekennzeichnet, dass** das Insektizid durch Substanzen aus der Gruppe der Pyrethroide, insbesondere Transfluthrin und/oder Empenthrin und/oder D-Phenothrin und/oder Metofluthrin, oder durch Lavandinöl gebildet ist.

14. Verfahren zur Herstellung eines Beutels nach einem der Ansprüche 1 bis 13,
mit einer Vliesstoffbahn (11), die in Bahnlaufrichtung gesehen auf einer ersten Seite mittels einer bei einer Beutelwandbenetzung und/oder - durchnässung mit Insektizid und/oder Duftstoff nicht abfärbenden Druckfarbe mit einer Vielzahl von gleichmäßig voneinander beabstandeten Beutelaufdrucken (5) und/oder Motiven bedruckt ist und die auf einer gegenüberliegenden zweiten Seite wenigstens bereichsweise mit einer Schweißschicht beschichtet ist,
wobei die Vliesstoffbahn (11) in einem ersten Verfahrensschritt in einer Schweißvorrichtung mittels Schweißbacken (21, 22) zu einer einseitig offenen und einen vorgegebenen Beutelaufdruck (5) aufweisenden Beuteltasche ausgebildet wird, deren Beutelöffnung unterhalb einer Befüllvorrichtung (20, 25) angeordnet wird, mittels der eine vorgegebene Menge an insektizid- und/oder duftstoffhaltigem Trägermaterial (3) in die Beuteltasche eingefüllt wird,
wobei die Befüllvorrichtung einen ein- oder mehrkammrigen Dispenser (20) aufweist, in dem das Trägermaterial (3) aufgenommen ist und der pro Kammer (23, 24) eine Dispenser-Auslassöffnung aufweist, die mittels eines eine Durchlassöffnung (26, 27) pro Kammer (23, 24) aufweisenden Verschlusselementes (25), insbesondere Schiebeblockes, verschließbar ist dergestalt, dass die Durchlassöffnung (26, 27) in der Dosierstellung mit der Dispenser-Auslassöffnung fluchtet und über die je nach Taktung vorgegebene Verweilzeit und die Durchlassöffnungsgröße bestimmte Menge an Trägermaterial (3) freigibt, und
dass die Dispenser-Auslassöffnung in der Nicht-Dosierstellung mittels des Verschlusselementes (25) verschlossen ist,
dass anschließend in einem zweiten Verfahrensschritt die Beuteltasche durch erneutes Betätigen von Schweißbacken (22) der Schweißvorrichtung geschlossen und ein geschlossener Beutel (1) ausgebildet wird, und
dass anschließend der Beutel (1) von der Vliesstoffbahn (11) abgelängt wird.

15. Verfahren nach Anspruch 14, **dadurch gekennzeichnet, dass** die Vliesstoffbahn (11) vor der Zuführung zur Schweißvorrichtung von einer Vliesstoffrolle (14) abgewickelt wird und/oder an einer Prägevorrichtung, insbesondere einem Heißprägestempel (18), vorbeigeführt wird, mittels dem pro Takt für jeden einzelnen Beutel eine vorgegebene Prägemarkierung aufgebracht wird.

16. Verfahren nach Anspruch 14 oder 15, **dadurch gekennzeichnet, dass** die abgelängten Beutel (1) auf eine Fördereinrichtung fallen und mittels dieser Fördereinrichtung (30) zu oder über eine Wägevorrichtung (31) transportiert werden, und
dass diejenigen Beutel (1), welche nicht innerhalb eines vorgegebenen Gewichtsbereiches liegen, mittels einer der Wägevorrichtung (31) nachgeschalteten Aussortiereinrichtung (32), vorzugsweise mittels Luftdruckbeaufschlagung, von der Fördereinrichtung (30) entfernt werden.

17. Verfahren nach einem der Ansprüche 14 bis 16, **dadurch gekennzeichnet, dass** die abgelängten, fertig hergestellten Beutel (1) mittels einer Folienumverpackung (7) luftdicht verschlossen werden, wobei die Folienumverpackung (7) durch Folienschläuche gebildet ist, die wenigstens an den in Schlauchrichtung gegenüberliegenden Endbereichen mittels einer quer zur Schlauchrichtung verlaufenden Querverschweißung (8) verschlossen sind.

## Claims

1. Bag for insecticide-containing carrier material, in particular moth-proof bag,
with a bag wall formed from a vapour-permeable and/or gas-permeable nonwoven,
with a cavity enclosed by the bag wall as bag interior (2) in which an insecticide-containing carrier material (3) is accommodated, and
with a bag imprint (5) applied to the outside of the bag as visible side by means of a printing ink,
**characterized**
**in that** an insecticide-containing and fragrance-containing carrier material (3) is accommodated in the bag interior (2),
**in that** the bag imprint (5) is applied by means of a printing ink which does not run upon wetting and/or saturating the bag wall with insecticide and/or fragrance wherein the printing ink is a two-component ink having a hardener constituent and the hardener concentration in the two-component ink is between 1 to 35% by weight.

2. Bag according to Claim 1, **characterized in that** the bag imprint (5) is printed onto the bag wall to establish a pre-given gas permeability with a pre-given number of dots per pre-given area.

3. Bag according to Claim 2, **characterized in that** the number of dots is between 12 and 48 dots per 1 cm² of printed area.

4. Bag according to one of Claims 1 to 3, **characterized in that** the hardener concentration in the two-component ink is between 3 and 25% by weight, most preferably between 5 and 23% by weight.

5. Bag according to one of Claims 1 to 4, **characterized in that** 0.05 to 1 mg, preferably 0.07 to 0.3 mg, most preferably 0.10 to 0.20 mg, of two-component ink is applied as printing ink to 1 cm² of printed exterior wall area.

6. Bag according to one of Claims 1 to 5, **characterized in that** the printing ink composed as two-component ink is additionally mixed with pre-given amounts of a transparent paste and/or of a thinner and/or of a retarder, and
**in that** the colour component of the two-component ink is formed by a polyester or polyurethane ink.

7. Bag according to one of Claims 1 to 6, **characterized in that** the nonwoven is formed by a parallel-bonded or cross-bonded nonwoven which preferably has a web weight between 40 and 150 g/m², preferably between 60 and 120 g/m², most preferably of 80 g/m².

8. Bag according to one of Claims 1 to 7, **characterized in that** the nonwoven is formed by a water-jet-consolidated polymer, preferably a synthetic polymer, most preferably a polyester coated with polyethylene, or alternatively by a polyester-viscose nonwoven.

9. Bag according to one of Claims 1 to 8, **characterized in that** the bag (1) is formed from a nonwoven web (11) which is coated on a first side, which forms the external side in the finished state, with the bag imprint (5) and on a second side, which forms the bag interior in the finished state, at least in areas with a fixing layer, preferably with a thermoplastic layer, most preferably with a polyethylene layer which can be stuck to one another by means of the pre-given bag wall areas for forming the bag.

10. Bag according to one of Claims 1 to 9, **characterized in that** the bag external wall is imprinted with the two-component ink in a screenprinting process, in particular in a flat-bed screenprinting process.

11. Bag according to one of Claims 1 to 10, **characterized in that**, in addition to the insecticide-containing and fragrance-containing carrier material (3), further filling material (4), in particular plastic granules and/or encapsulated fragrances and/or scented wooden articles and/or flowers, is accommodated in the bag interior (2).

12. Bag according to one of Claims 1 to 11, **characterized in that** the carrier material (3) is microporous plastic granules which store at least 100%, preferably at least 200%, of its own weight of the amount of insecticide and/or fragrance.

13. Bag according to one of Claims 1 to 12, **characterized in that** the insecticide is formed by substances from the group of the pyrethroids, in particular transfluthrin and/or empenthrin and/or D-phenothrin and/or metofluthrin, or by lavender oil.

14. Process for the production of a bag according to one of Claims 1 to 13,
with a nonwoven web (11) which is imprinted, when seen in the direction of web movement, on a first side by means of a printing ink which does not run upon wetting and/or saturating the bag wall with insecticide and/or fragrance with a large number of evenly spaced bag imprints (5) and/or motifs, and which is coated on an opposite second side at least in areas with a weld layer,
where the nonwoven web (11) is formed in a first process step in a welding device by means of welding jaws (21, 22) to give a bag pocket which is open on one side and has a pre-given bag imprint (5), the bag opening of which is arranged underneath a filling device (20, 25), by means of which a pre-given amount of insecticide-containing and/or fragrance-containing carrier material (3) is filled into the bag pocket, where the filling device has a single-chambered or multichambered dispenser (20) in which the carrier material (3) is accommodated and which has one dispenser outlet opening per chamber (23, 24) which is closable by means of a closure element (25) having one outlet opening (26, 27) per chamber (23, 24), in particular a sliding block, arranged so as to be lockable such that the passage opening (26, 27) in the metering position is flush with the dispenser outlet opening and over the residence time pre-given depending on the cycle and the passage opening size, releases a certain amount of carrier material (3), and
that the dispenser outlet opening in the non-metering position is closed by means of the closure element (25),
that then, in a second process step, the bag pocket is closed through renewed operation of welding jaws (22) of the welding device and a closed bag (1) is formed, and
that then the bag (1) is cut from the nonwoven web (11).

15. Process according to Claim 14, **characterized in that** the nonwoven web (11) is wound prior to conveyance to the welding device by a nonwoven roller (14) and/or is conveyed past an embossing device, in particular a hot embossing stamp (18), by means of which a pre-given embossed mark is applied per cycle to each individual bag.

16. Process according to Claim 14 or 15, **characterized in that** the cut-off bags (1) drop onto a conveyor and are transported by means of this conveyor (30) to or beyond a weighing device (31), and
**in that** those bags (1) which are not within a pre-given weight range are removed from the conveyor (30) by means of a sorting device (32) downstream of the weighing device (31), preferably by means of impact with pressurized air.

17. Process according to one of Claims 14 to 16, **characterized in that** the cut-off, finished bags (1) are sealed air-tight by means of a film packaging (7) where the film packaging (7) is formed by film tubes which are closed at least at the opposite end areas in the tube direction by means of a cross-welding (8) which runs transverse to the tube direction.

## Revendications

1. Sachet pour un support contenant un insecticide, en particulier sachet antimite,
avec une paroi de sachet formée d'un non-tissé perméable à la vapeur et/ou au gaz,
avec un espace creux délimité par la paroi de sachet comme espace intérieur de sachet (2), dans lequel un support (3) contenant un insecticide est reçu, et
avec une impression de sachet (5) appliquée sur le côté extérieur de sachet comme recto au moyen d'une encre d'imprimerie,
**caractérisé en ce que**
un support (3) contenant un insecticide et un parfum est reçu dans l'espace intérieur de sachet (2),
l'impression de sachet (5) est appliquée au moyen d'une encre d'imprimerie ne déteignant pas en cas d'humidification et/ou de trempage de paroi de sachet avec l'insecticide et/ou le parfum l'encre d'imprimerie etant une encre à deux composants présentant un constituant durcisseur et la concentration du durcisseur dans l'encre à deux composants étant comprise entre 3 et 25% en poid.

2. Sachet selon la revendication 1, **caractérisé en ce que** l'impression de sachet (5) est imprimée pour le réglage d'une perméabilité au gaz prescrite avec un nombre prescrit de points de trame par surface prescrite sur la paroi de sachet.

3. Sachet selon la revendication 2, **caractérisé en ce que** le nombre de points de trame est compris entre 12 et 48 points de trame par 1 cm² de surface imprimée.

4. Sachet selon l'une quelconque des revendications 1 à 3, **caractérisé en ce que** la concentration du durcisseur dans l'encre à deux composants est comprise entre 3 et 25 % en poids, de manière davantage préférée entre 5 et 23 % en poids.

5. Sachet selon l'une quelconque des revendications 1 à 4, **caractérisé en ce qu'**entre 0,05 et 1 mg, de préférence 0,07 et 0,3 mg, de manière davantage préférée 0,10 et 0,20 mg d'encre à deux composants est appliqué comme encre d'imprimerie sur 1 cm² de zone de paroi extérieure imprimée.

6. Sachet selon l'une quelconque des revendications 1 à 5, **caractérisé en ce que** l'encre d'imprimerie réalisée comme encre à deux composants est mélangée en outre à des quantités prescrites à une pâte transparente et/ou à un diluant et/ou à un retardateur, et
**en ce que** le composant de l'encre à deux composants est formé par une encre au polyester ou au polyuréthane.

7. Sachet selon l'une quelconque des revendications 1 à 6, **caractérisé en ce que** le non-tissé est formé par un non-tissé à fils croisés ou parallèles qui présente de préférence un poids compris entre 40 et 150 g/m², de préférence 60 et 120 g/m², de manière davantage préférée de 80 g/m².

8. Sachet selon l'une quelconque des revendications 1 à 7, **caractérisé en ce que** le non-tissé est formé par un polymère durci par jet d'eau, de préférence un polymère synthétique, de manière davantage préférée un polyester revêtu de polyéthylène ou en variante par un non-tissé de polyester et viscose.

9. Sachet selon l'une quelconque des revendications 1 à 8, **caractérisé en ce que** le sachet (1) est formé par une bande de non-tissé (11) qui est revêtue sur un premier côté formant à l'état fabriqué le côté extérieur de l'impression de sachet (5) et sur un second côté formant à l'état fabriqué la paroi intérieure de sachet au moins par endroits d'une couche de fixation, de préférence d'une couche thermoplastique, de manière davantage préférée d'une couche de polyéthylène, au moyen de laquelle des zones de paroi de sachet prescrites peuvent adhérer l'une à l'autre pour la réalisation du sachet.

10. Sachet selon l'une quelconque des revendications 1 à 9, **caractérisé en ce que** la paroi extérieure de sachet est imprimée avec l'encre à deux composants dans un procédé de sérigraphie, en particulier dans un procédé de sérigraphie à banc plat.

11. Sachet selon l'une quelconque des revendications 1 à 10, **caractérisé en ce que** dans l'espace intérieur du sachet (2) est reçu, outre le support (3) contenant l'insecticide et le parfum, un autre matériau de remplissage (4), en particulier un granulat plastique et/ou des parfums en capsules et/ou des bois parfumés et/ou des fleurs.

12. Sachet selon l'une quelconque des revendications 1 à 11, **caractérisé en ce que** le support (3) est un granulat plastique microporeux qui stocke au moins 100 %, de préférence au moins 200 % de son propre poids en quantité d'insecticide et/ou de parfum.

13. Sachet selon l'une quelconque des revendications 1 à 12, **caractérisé en ce que** l'insecticide est formé par des substances du groupe des pyréthroïdes, en particulier la transfluthrine et/ou l'empenthrine et/ou la D-phénothrine et/ou la métofluthrine ou par de l'huile de lavandin.

14. Procédé de fabrication d'un sachet selon l'une quelconque des revendications 1 à 13,
avec une bande de non-tissé (11) qui est imprimée, vu dans le sens de marche de la bande, sur un premier côté au moyen d'une encre d'imprimerie ne déteignant pas en cas d'humidification et/ou de trempage de paroi de sachet avec de l'insecticide et/ou du parfum d'une pluralité d'impressions de sachet (5) et/ou de motifs espacés régulièrement les uns des autres et qui est revêtue sur un second côté opposé au moins par endroits d'une couche de soudure,
dans lequel la bande de non-tissé (11) est réalisée dans une première étape de procédé dans un dispositif de soudage au moyen de mâchoires de soudage (21, 22) pour former une pochette ouverte d'un côté et présentant une impression de sachet (5) prescrite, dont l'ouverture de sachet est disposée au-dessous d'un dispositif de remplissage (20, 25), au moyen duquel une quantité prescrite de support (3) contenant l'insecticide et/ou le parfum est rempli dans la pochette,
dans lequel le dispositif de remplissage présente un distributeur (20) à une ou plusieurs chambres, dans lequel le support (3) est reçu et qui présente par chambre (23, 24) une ouverture de sortie de distributeur qui peut être fermée au moyen d'un élément de fermeture (25) présentant une ouverture de passage (26, 27) par chambre (23, 24), en particulier un bloc coulissant de telle manière que l'ouverture de passage (26, 27) s'aligne en position de dosage avec l'ouverture de sortie de distributeur et libère une quantité de support (3) déterminée par la durée de conservation prescrite selon la cadence et la taille de l'ouverture de passage, et
en ce que l'ouverture de sortie de distributeur est fermée dans la position de non dosage au moyen de l'élément de fermeture (25),
en ce qu'ensuite, dans une seconde étape de procédé, la pochette est fermée par un nouvel actionnement des mâchoires de soudage (22) du dispositif de soudage et un sachet (1) fermé est réalisé, et
en ce qu'ensuite, le sachet (1) est mis à longueur de la bande de non-tissé (11).

15. Procédé selon la revendication 14, **caractérisé en ce que** la bande de non-tissé (11) est déroulée avant l'amenée au dispositif de soudage, d'un rouleau de non-tissé (14) et/ou est passée devant un dispositif d'estampage, en particulier un poinçon d'estampage à chaud (18), au moyen duquel un marquage prescrit est appliqué par cadence pour chaque sachet individuel.

16. Procédé selon la revendication 14 ou 15, **caractérisé en ce que** les sachets (1) mis à longueur tombent sur un dispositif de transport et sont transportés au moyen de ce dispositif de transport (30) vers ou sur un dispositif de pesée (31), et
**en ce que** les sachets (1) qui ne se trouvent pas à l'intérieur d'une plage de poids prescrite, sont retirés au moyen d'un dispositif de triage (32) monté en aval du dispositif de pesée (31), de préférence au moyen de la sollicitation par air comprimé, du dispositif de transport (30).

17. Procédé selon l'une quelconque des revendications 14 à 16, **caractérisé en ce que** les sachets (1) fabriqués, mis à longueur sont fermés de manière étanche à l'air au moyen d'un suremballage de film (7), le suremballage de film (7) étant formé par des gaines tubulaires qui sont fermées au moins sur les zones d'extrémité opposées dans le sens de la gaine au moyen d'un soudage transversal (8) s'étendant transversalement au sens de la gaine.
